(19)

Europäisches
Patentamt

European
Patent Office

Office européen
des brevets

(11) **EP 4 643 780 A1**

(12) **EUROPEAN PATENT APPLICATION**

(43) Date of publication:
05.11.2025 Bulletin 2025/45

(21) Application number: 25163096.8

(22) Date of filing: 11.03.2025

(51) International Patent Classification (IPC):
*A61B 5/16* (2006.01)    *G06Q 10/0631* (2023.01)
*G06Q 10/0639* (2023.01)

(52) Cooperative Patent Classification (CPC):
**G06Q 10/063112; A61B 5/167; G06Q 10/0639;
G06Q 10/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 30.04.2024 JP 2024073549

(71) Applicant: **Hitachi, Ltd.**
**Tokyo 100-8280 (JP)**

(72) Inventors:
• **NUMATA, Takashi**
**Tokyo, 100-8280 (JP)**
• **NAKAMICHI, Takuya**
**Tokyo, 100-8280 (JP)**
• **MATSUDA, Takahiro**
**Tokyo, 100-8280 (JP)**
• **NAKAMURA, Toshiteru**
**Tokyo, 100-8280 (JP)**

(74) Representative: **Mewburn Ellis LLP**
**Aurora Building**
**Counterslip**
**Bristol BS1 6BX (GB)**

(54) **COOPERATIVE ACTION SUPPORT SYSTEM AND COOPERATIVE ACTION SUPPORT METHOD**

(57) A system identifies a personal trait of each of members belonging to an organization, from personal trait data that includes data representing the personal trait of each of the members, and predicts a cooperative action degree in the organization, based on the relationship between the personal traits of the members. The system visualizes information about the predicted cooperative action degree.

FIG. 1

**Description**

CROSS-REFERENCE TO PRIOR APPLICATION

This application relates to and claims the benefit of priority from Japanese Patent Application number 2024-073549, filed on April 30, 2024 the entire disclosure of which is incorporated herein by reference.

BACKGROUND

The present invention relates generally to a technique for action assistance.

The achievement of the entire organization is affected by the action of each member belonging to the organization. JP 2023-038750 A discloses a technique that quantitatively presents the activity of each individual in the organization, from environmental factors.

SUMMARY

The technique disclosed in JP 2023-038750 A evaluates the traits of members and the trait of an organization other than those of the members, on a member-by-member basis. Accordingly, the activities of members themselves in the organization can be presented. It is however difficult to contribute to prediction and/or maximization of the achievement of the organization including the members themselves.

A computer identifies a personal trait of each of members belonging to an organization, from personal trait data that includes data representing the personal trait of each of the members, predicts a cooperative action degree in the organization, based on the relationship between the personal traits of the members, and visualizes information about the predicted cooperative action degree.

The present invention contributes to prediction and/or maximization of the achievement of the organization.

BRIEF DESCRIPTION OF THE DRAWINGS

Fig. 1 illustrates a configuration example of an entire system according to an embodiment;
Fig. 2 illustrates data stored by a storage apparatus, and functions of an arithmetic apparatus;
Fig. 3 illustrates a configuration example of a personal trait DB;
Fig. 4 illustrates a configuration example of an organization trait setting DB;
Fig. 5 illustrates a configuration example of a cooperative action degree DB;
Fig. 6 illustrates a configuration example of an output setting DB;
Fig. 7 illustrates an example of a flow of processes executed in the embodiment;
Fig. 8 illustrates an example of a screen for a member; and
Fig. 9 illustrates an example of a screen for an administrator.

DESCRIPTION OF EMBODIMENTS

In the following description, "interface apparatus" may be one or more interface devices. The one or more interface devices may be at least one of the following.

- Input/output (I/O) interface apparatuses that are one or more I/O interface devices. The input/output (I/O) interface device is an interface device for at least one of I/O device and a remote display computer. The I/O interface device for the display computer may be a communication interface device. At least one I/O device may be user interface devices, for example, any of input devices such as a keyboard and a pointing device, and of an output device such as a display device.
- A communication interface apparatus that is one or more communication interface devices. One or more communication interface devices may be one or more communication interface devices of the same type (e.g., one or more network interface cards (NICs)) or two or more communication interface devices of different types (e.g., an NIC and an host bus adapter (HBA)).

In the following description, "memory" is one or more memory devices that are an example of one or more storage devices, and may typically be a main storage device. At least one memory device among the memories may be a volatile memory device or a non-volatile memory device.

In the following description, "persistent storage apparatus" may be one or more persistent storage devices that are an example of one or more storage devices. The persistent storage device may typically be a nonvolatile storage device (e.g., an auxiliary storage device), and may specifically be, for example, a hard disk drive (HDD), a solid state drive (SSD), an nonvolatile memory express (NVME) drive, or a storage class memory (SCM).

In the following description, "storage apparatus" may be at least a memory of a memory and a persistent storage apparatus.

In the following description, "processor" may be one or more processor devices. At least one processor device may typically be a microprocessor device, such as a central processing unit (CPU), but may also be a processor device of another type, such as a graphics processing unit (GPU). At least one processor device may be either single-core or multi-core. At least one processor device may be a processor core. At least one processor device may be a processor device in a broad sense, such as a circuit (e.g., a field-programmable gate array (FPGA), a complex programmable logic device (CPLD), or an application specific integrated circuit (ASIC)) that is an aggregate of gate arrays in a hardware description language for performing a part or the entirety of processing.

In the following description, a function will sometimes be described with an expression "yyy section", but the function may be implemented by executing one or more computer programs by a processor, may be implemented by one or more hardware circuits (e.g., FPGA or ASIC), or may be implemented by a combination thereof. In a case where the function is implemented by the processor executing a program, determined processing is performed using the storage apparatus, the interface apparatus and/or the like as appropriate, and thus, the function may be at least a part of the processor. The processing described with the function as a subject may be processing performed by a processor or an apparatus including the processor. The program may be installed from a program source. The program source may be, for example, a program distribution computer or a computer-readable storage medium (e.g., a non-transitory storage medium). The description of each function is an example, and a plurality of functions may be put together into one function or one function may be divided into a plurality of functions.

In the following description, data will sometimes be described with an expression such as "xxx DB" ("DB" is an abbreviation for database), but the data may be data having any structure (for example, structured data or non-structured data), and a model that outputs data in response to input of data may be employed. Consequently, "xxx DB" may be called "xxx data". In the following description, the configuration of each DB is an example. One DB may be divided into two or more DBs. All or part of two or more DBs may be one DB.

In the following description, in a case where the same kind of elements are described without distinction, common reference signs among the reference signs may be used, and in a case where the same kind of elements are distinguished, reference signs may be used.

Hereinafter, an embodiment will be described. Note that "cooperative action degree" about an organization means the degree of cooperative action that can be implemented in the organization. In the following embodiment, "cooperative action ratio" is adopted as "cooperative action degree". The "cooperative action ratio" is the ratio of the number of members that execute a cooperative action in the organization to the number of members that constitute the organization.

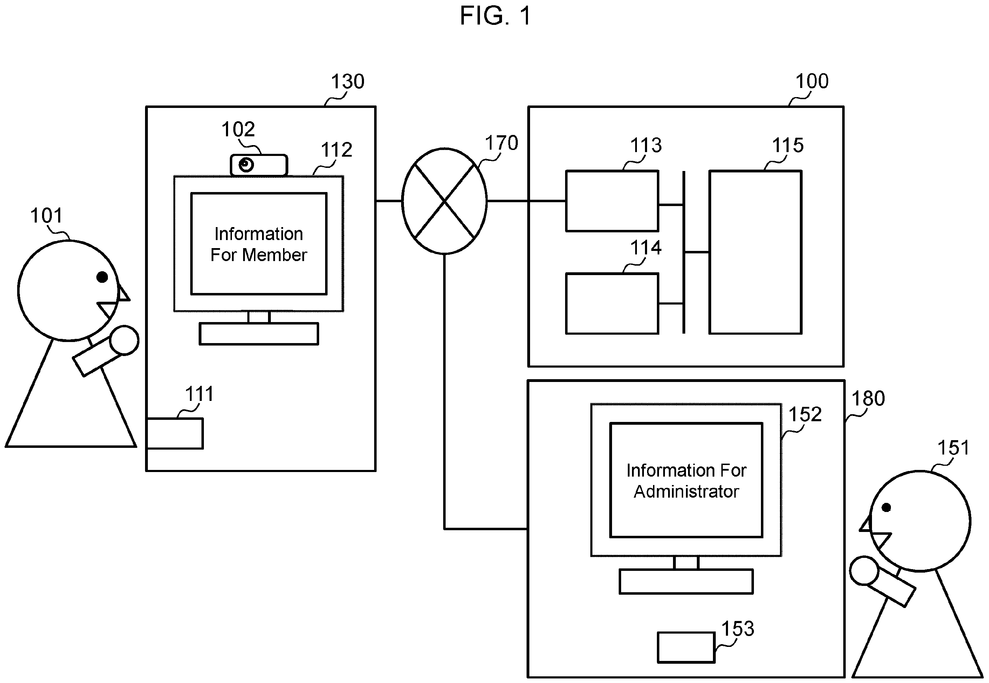

Fig. 1 illustrates a configuration example of an entire system according to an embodiment.

The cooperative action support system 100 communicates with a member apparatus 130 and an administrator apparatus 180 via a communication network 170. The communication network 170 is, for example, the Internet, a wide area network (WAN), or a local area network (LAN). One of the member apparatus 130 and the administrator apparatus 180 may be absent.

The member apparatus 130 is an information processing terminal of a member 101 belonging to the organization, for example, a computer such as a personal computer or a smartphone. The member apparatus 130 includes an input device 111 and a display device 112. The member apparatus 130 may include one or more sensors that measure an action of the member 101, for example, a camera 102 and a mouse. The mouse is an example of the input device 111. The display device 112 may be a touchscreen.

The administrator apparatus 180 is an information processing terminal of an administrator 151, for example, a computer such as a personal computer or a smartphone. The administrator apparatus 180 includes an input device 153 and a display device 152. The administrator 151 may or may not be a member of the organization. The administrator 151 may be a person who formulates a measure for maximizing the organization's achievements.

The cooperative action support system 100 includes an interface apparatus 113, a storage apparatus 114, and an arithmetic apparatus 115 coupled to them.

The interface apparatus 113 communicates with the member apparatus 130 and the administrator apparatus 180 via the communication network 170.

The storage apparatus 114 stores a computer program that is to be executed by the arithmetic apparatus 115, and data that is to be input and output by the arithmetic apparatus 115. The storage apparatus 114 stores a personal trait DB that includes data representing a personal trait of each of members 101 belonging to the organization.

The arithmetic apparatus 115 is a processor, and executes, for example, the following processes by executing the computer program. That is, the arithmetic apparatus 115 identifies the personal trait of each of multiple (typically all) members 101 belonging to the organization, predicts the cooperative action ratio in the organization, based on the personal trait relationship that is the relationship between the personal traits of the members, and visualizes information about the predicted cooperative action ratio. The information about the cooperative action ratio includes information for the member (information visualized for the member 101) and/or information for the administrator (information visualized for the administrator 151). Accordingly, this contributes to prediction and/or maximization of the organization's achievements. Specifically, for example, it is expected to execute the cooperative action by the member 101 viewing the information for the member displayed on the display device 112 of the member apparatus 130. Consequently, the organization's achievements are expected to be maximized. For example, it is expected that the organization's achievements are predicted by the administrator 151 viewing the information for the administrator displayed on the display device 152 of the administrator apparatus 180, and the member 101 is encouraged to perform the cooperative action for maximizing the organization's achievements.

Hereinafter, the present embodiment will be described in detail.

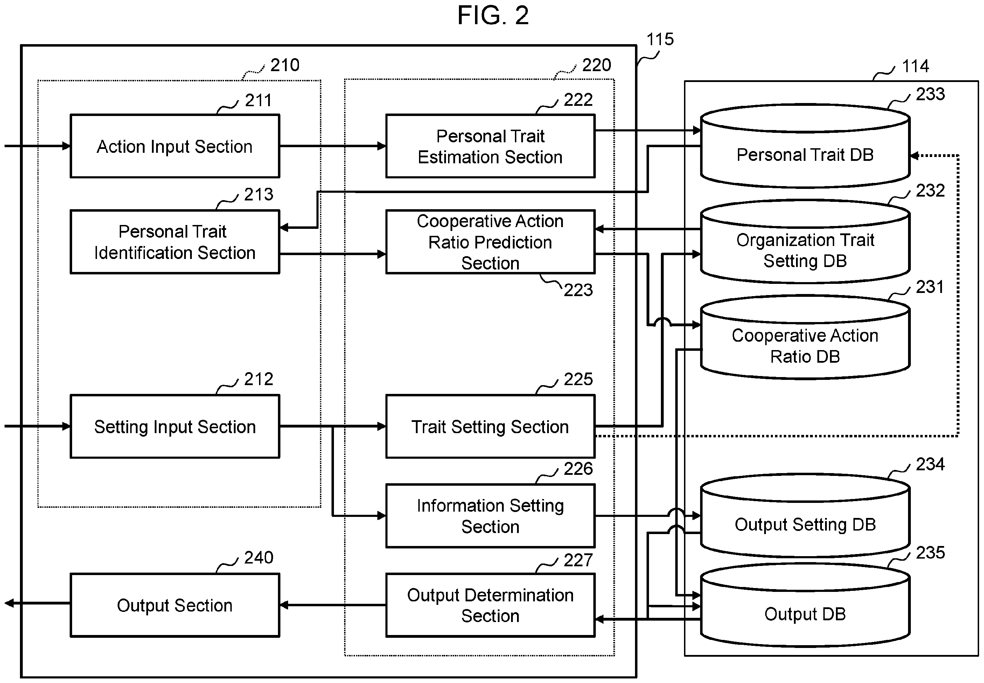

Fig. 2 illustrates data stored by the storage apparatus 114, and functions of the arithmetic apparatus 115.

The storage apparatus 114 stores a personal trait DB 233, an organization trait setting DB 232, a cooperative action ratio DB 231, an output setting DB 234, and an output DB 235. The personal trait DB 233 includes data that represents the personal trait of each of the members belonging to the organization. The organization trait setting DB 232 includes data about a set organization trait. The cooperative action ratio DB 231 includes data about a predicted cooperative action ratio. The output setting DB 234 includes data set to output induction content that is content for inducing a cooperative action. The output DB 235 includes data about the predicted cooperative action ratio.

By executing a computer program, the arithmetic apparatus 115 implements an input section 210, an arithmetic section 220, and an output section 240. The input section 210 includes an action input section 211, a personal trait identification section 213, and a setting input section 212. The arithmetic section 220 includes a personal trait estimation section 222, a cooperative action ratio prediction section 223, a trait setting section 225, an information setting section 226, and an output determination section 227.

Hereinafter, an example of functions implemented by the arithmetic apparatus 115 and processing performed in the present embodiment will be described.

The setting input section 212 receives setting data (data of setting target) from the administrator apparatus 180. The setting data includes data about the organization trait, and data about output content. The trait setting section 225 creates or updates the organization trait setting DB 232 that includes data about the organization trait. The information setting section 226 creates or updates the output setting DB 234 that includes data about the output content.

There may be data that represents the personal trait of each member, as setting data. The trait setting section 225 may create or update the personal trait DB 233 that includes data representing the personal trait of each member. The setting data may be input from the member apparatus 130 instead of or in addition to the administrator apparatus 180. For example, for at least one member 101, data representing the personal trait of the member may be input from the member 101 through the member apparatus 130, and the data may be stored in the personal trait DB 233.

For example, for at least one member 101, the personal trait of the member 101 (e.g., at least the psychological trait) may be identified using techniques disclosed in previous applications (Japanese Patent Application No. 2023-014642, US18/378,475, and EP23203803.4) by the same applicant as the present application, or identified based on answers to questions prepared to identify the personal trait. Specifically, for example, the action input section 211 receives action data to questions (questions prepared to identify the personal trait and/or questions prepared for a purpose different from that for identification of the personal trait), from the member apparatus 130. The action data may include data of answers to the questions, or include actions detected by sensors, such as a mouse or the camera 102 (e.g., "related action" disclosed in the previous application). The personal trait estimation section 222 may estimate the personal trait of the member 101 from the action data. The data that represents the estimated personal trait is stored in the personal trait DB 233.

The personal trait identification section 213 identifies the personal trait of each of the members 101 belonging to the organization, from the personal trait DB 233. The cooperative action ratio prediction section 223 identifies the trait setting of the organization from the organization trait setting DB 232, and predicts the cooperative action ratio in the organization, based on the personal trait relationship that is the relationship between the personal traits of the members of the organization and on the identified organization trait setting. The cooperative action ratio prediction section 223 stores data related to the predicted cooperative action ratio, in the cooperative action ratio DB 231.

The output determination section 227 determines data on which visualized information related to the predicted cooperative action ratio is based, on the basis of (i.e., data related to the predicted cooperative action ratio) stored in the cooperative action ratio DB 231. Specifically, for example, the output determination section 227 may determine data on which information for the administrator is based, on the basis of the data stored in the cooperative action ratio DB 231. The output determination section 227 may determine data on which the information for the member is based (e.g., data of the induction content for inducing the cooperative action) on the basis of the data stored in the cooperative action ratio DB 231 and of the data stored in the output setting DB 234. The output section 240 causes the member apparatus 130 and/or the administrator apparatus 180 to display, via the interface apparatus 113, information based on data determined by the output determination section 227, i.e., information related to the predicted cooperative action ratio.

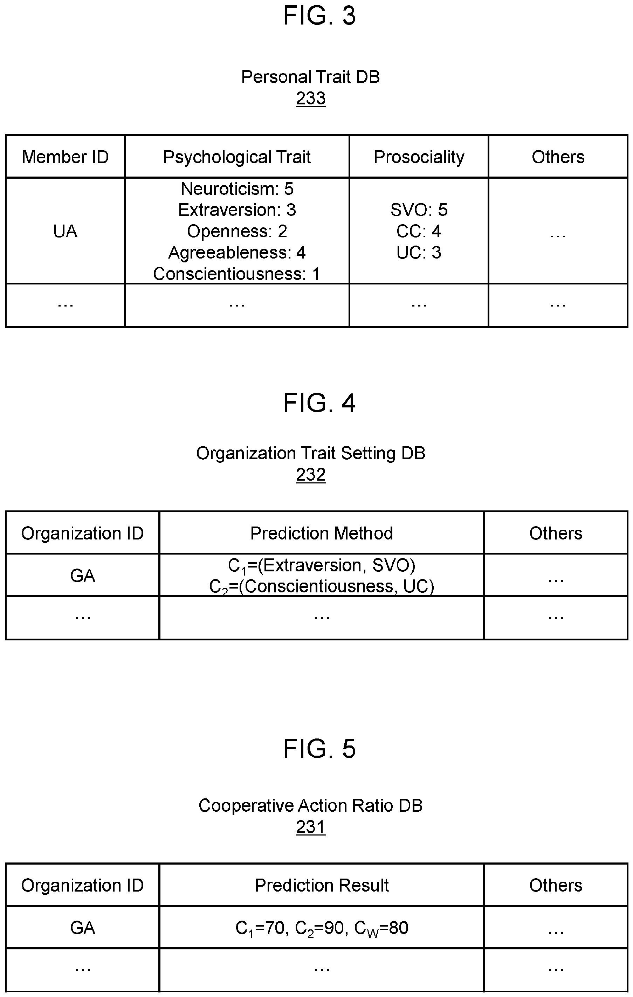

Fig. 3 illustrates a configuration example of the personal trait DB 233.

The personal trait DB 233 may include data that includes a member ID, a psychological trait, a prosociality, and Others, on a member-by-member basis.

The psychological trait may be an example of a second type of personal trait. For example, the psychological trait may be made up of at least one of five components (what is called big fives) that are neuroticism, extraversion, openness to experience, agreeableness, and conscientiousness. For each member, data related to the psychological trait among the personal traits may include a value representing the magnitude (intensity) of a component that is at least one component among the five components. The value of each psychological trait may be a value range from a predetermined maximum to minimum.

The prosociality may be an example of a first type of personal trait. The prosociality may be made up of, for example, at least one component among three components that are a social value orientation (SVO), a conditional cooperator (CC), and an unconditional cooperator (UC). For each member, data related to the prosociality among the personal traits may include a value representing the magnitude (intensity) of a component for at least one component among these three components. The value of each prosociality component may be a value range from a predetermined maximum to minimum. The prosociality component value range may be identical to or different from the value range of the psychological trait component.

As described above, for each member, the personal trait includes two or more types of personal traits (personal trait components) that include the first type and second type of personal traits (personal trait components). That is, in the present Description, the "personal trait" may include not only the psychological trait and/or the prosociality but also another type of personal trait (personal trait component), such as of character. The personal trait may be a concept that includes a personality trait. The personality trait may include the psychological trait and/or the prosociality.

The psychological trait, which is an example of the second type of personal trait, may be an example of a trait that represents an attitude and/or a tendency related to communication (for example, communicative, intended to engage with others, etc.) and/or a plan (e.g., inclined to follow a plan, highly responsible, etc.). One or more components among the five components that are the neuroticism, extraversion, openness to experience, agreeableness, and conscientiousness may be an example of one or more traits of the second type. As an example of the second type of personal trait, a character trait may be adopted instead of or in addition to the psychological trait. In the present Description, the psychological trait may include the character trait in a broad sense.

The prosociality, which is an example of the first type of personal trait, may be an example of a trait related to the attitude and/or the tendency related to cooperation (e.g., cooperativeness, fitting in with others, altruism, intention to do something for others, etc.). One or more components among three components that are SVO, CC, and UC may be an example of one or more traits of the first type.

In the personal trait DB 233, Others may include a list of organization ID of the organization to which the member belongs, on a member-by-member basis.

Fig. 4 illustrates a configuration example of the organization trait setting DB 232.

The organization trait setting DB 232 may include data that represents the organization ID, the prediction method, and Others, on an organization-by-organization basis.

For each organization, the "prediction method" is a prediction method for the cooperative action ratio of the organization, and may be made up of, for example, one or more trait combinations. The "trait combination" is the combination of the first type of trait and the second type of trait. Specifically, the personal trait relationship (the relationship between the personal traits of the members 101) includes the relationship between one or more traits of the first type and one or more traits of the second type (one or more trait combinations), for each of the members 101. The reason of prediction of the cooperative action ratio in such a view in the present embodiment is described below.

According to an experiment by the inventors of the present application, the following results are obtained.

- There is a tendency that the cooperative action ratio relatively largely varies depending on the prosociality (at least one of SVO, CC, and UC in the present embodiment) of each member in the organization.
- There is a tendency that the cooperative action ratio does not reach the maximum "1" even if the prosociality of every member is high.
- There is a tendency that the cooperative action ratio does not become the minimum "0" even if the prosociality of every member is low.
- A plurality of organizations with a similar balance (variation) of prosocialities of the members have different cooperative action ratios.
- There is a tendency that the cooperative action ratio relatively largely varies even by at least one of the agreeableness, extraversion, and the conscientiousness, which are examples of the second type of trait of each member of the organization.

Improvement in the accuracy of predicting the cooperative action ratio contributes to prediction and/or maximization of the organization's achievements.

Accordingly, the cooperative action support system 100 that predicts the cooperative action ratio, based on the first type of trait whose example is the prosociality, and on the second type of trait whose example is at least one of the agreeableness, the extraversion, and the conscientiousness is constructed. This improves the determination coefficient. That is, the prediction accuracy of the cooperative action ratio is improved.

Specifically, the cooperative action ratio prediction section 223 calculates the following [Expression 1] for each combination of the first type of trait and the second type of trait designated as "prediction method", thus calculating Cooperation (the cooperative action ratio based on the combination).

[Expression 1]

$$Cooperation = \sum_{i=1}^{n} (X_i \times (Y_i - Y_{th}))$$

n denotes the number of members that constitute the organization. $X_i$ denotes any psychological trait component (an example of the second type of trait) of each member. The value that can be substituted for $X_i$ may be at least one of values of agreeableness, extraversion, and conscientiousness. $Y_i$ denotes any of the prosociality components (examples of the first type of trait) of each member. The value that can be substituted for $Y_i$ may be at least one of SVO, CC, and UC. $Y_{th}$ denotes a positive or negative threshold for the prosociality component adopted as $Y_i$ (e.g., the value determined based on whether to positively or negatively affect the surroundings, the median of a scale or the like).

According to the example illustrated in Fig. 4, for an organization with an organization ID "GA", a combination of the extraversion and SVO, and a combination of the conscientiousness and UC are used as "prediction method". $C_1$ denotes Cooperation calculated using the combination of the extraversion and SVO. $C_2$ denotes Cooperation calculated using the combination of the conscientiousness and UC. The values substituted for $X_i$ and $Y_i$ in Expression 1 are, for example, values respectively identified from the personal trait DB 233. $Y_{th}$ denotes a value identified from, for example, the organization trait setting DB 232 (e.g., Others corresponding to this organization). The cooperative action ratio prediction section 223 calculates the cooperative action ratio of the organization with the organization ID "GA" based on $C_1$ and $C_2$ (for example, the cooperative action ratio is the mean of $C_1$ and $C_2$). Note that this example is the combination of the extraversion and the prosociality component. Instead of or in addition to this combination, the combination of the agreeableness and the prosociality component, and/or the combination of the conscientiousness and the prosociality component may be adopted.

In the organization trait setting DB 232, for each organization, Others may include a list of member IDs of the members belonging to the corresponding organization, the ID of the administrator of the corresponding organization, and the value of $Y_{th}$ of each trait combination.

Fig. 5 illustrates a configuration example of the cooperative action ratio DB 231.

The cooperative action ratio DB 231 may include the organization ID, the prediction result, and Others, on an organization-by-organization basis. The "prediction result" may include the cooperative action ratio that is an element of $C_W$, i.e., the cooperative action ratio of each combination designated as "prediction method", besides the predicted cooperative action ratio $C_W$.

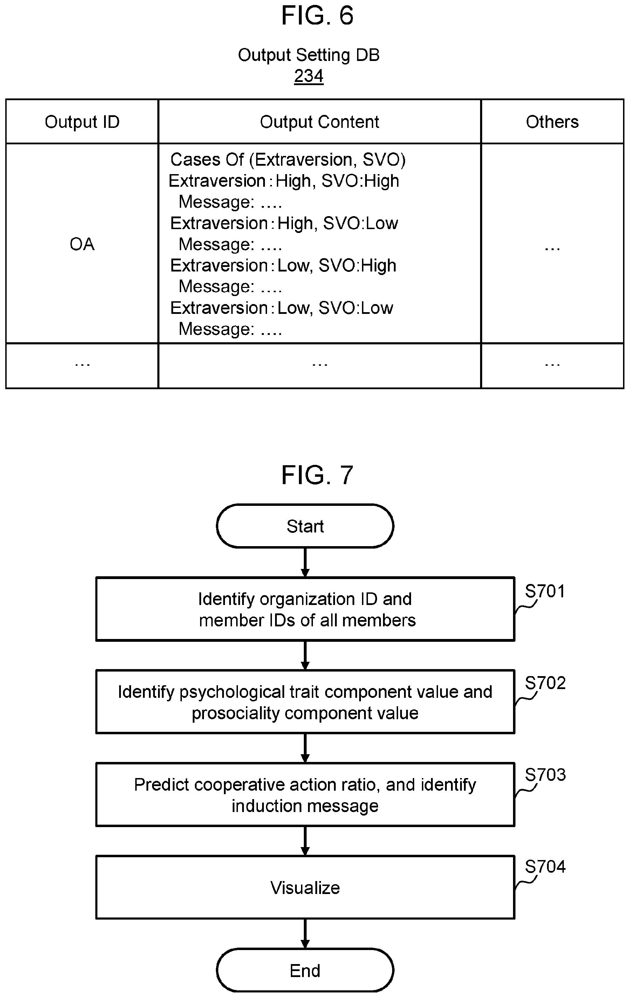

Fig. 6 illustrates a configuration example of the output setting DB 234.

The output setting DB 234 may include data that represents the output ID, output content, and Others, with respect to each output (e.g., the trait combination).

The "OUTPUT CONTENT" may be, for example, induction content itself that can be included in information for the member, or data on which the induction content is based. In the present embodiment, the induction content is an induction message that is a message for inducing the cooperative action.

The induction message can be uniquely determined from the relationship between the magnitude of the prosociality component value and the magnitude of the psychological trait component value. For example, the induction message is determined based on what is the psychological trait component, whether the psychological trait component value is high or low, what is the prosociality component, and whether the prosociality component value is high or low. For example, for the combination of the extraversion and SVO, the induction message is determined based on whether the extraversion value is high or low (for example, whether or not the extraversion value is equal to or higher than a predetermined threshold) and on whether the SVO value is high or low (for example, whether or not the SVO value is equal to or higher than a predetermined threshold). More specifically, for example, if the extraversion is high and SVO is also high, the induction message may be a message that encourages the others to perform cooperative actions. If the extraversion is high but SVO is low, the induction message may be a message of an instruction for listening to comments from those around you. If the extraversion is low but SVO is high, the induction message may be a message of an instruction for believing in themselves and not to be influenced by the surroundings. If the extraversion is low and SVO is low, the induction message may be a message of an instruction for watching the actions of the surroundings and encouraging self-reflection.

As described above, for each of one or more members among members belonging to the organization, the output determination section 227 identifies the induction message that induces the member to perform the cooperative action, based on the relationship between the magnitudes of one or more prosociality component values and the magnitudes of one or more psychological trait component values of the member. The "one or more members" may be all or some of the members and, for example, members whose psychological trait or cooperative action ratio satisfies a predetermined condition, or members designated by the administrator 151. The "members whose cooperative action ratio satisfies the predetermined condition" is, for example, members about whom "$X \times (Y - Y_{th})$" value of the trait combination or a value based on the "$X \times (Y - Y_{th})$" value of each trait combination is less than a threshold, i.e., members about whom the cooperative action ratio prediction section 223 predicts that the possibility of performing the cooperative action is low.

The magnitude of the prosociality component value can be considered as an indicator of magnitude of possibility of prioritizing the organization's achievement maximization. On the other hand, the magnitude of the psychological trait component value can be considered as an indicator of magnitude of possibility of prioritizing personal achievement maximization. Accordingly, with a certain relationship (combination) between the magnitude of the prosociality component value and the magnitude of the psychological trait component value, contribution to the organization's achievement maximization can be expected, or the organization's achievements possibly decrease. According to the present embodiment, for each relationship between (combination of) the magnitude of the prosociality component value and the magnitude of the psychological trait component value, the induction message is prepared and provided. Accordingly, irrespective of the relationship between (combination of) the magnitude of the prosociality component value and the magnitude of the psychological trait component value, the cooperative action is supported for every member. As a result, the organization's achievements can be expected to be maximized.

An example of a flow of processes executed in the embodiment is described below.

Fig. 7 illustrates an example of the flow of processes executed in the embodiment.

The personal trait identification section 213 identifies the organization ID of the organization, and the member IDs of all the members of the organization, based on the personal trait DB 233 or the organization trait setting DB 232 (S701). Any method may be adopted as the method of identifying the organization IDs and the member IDs. For example, the member IDs input from the respective members during an on-line meeting may be adopted as the member IDs of all the members. Alternatively, the organization ID may be input from the administrator or a certain member, and all the member IDs associated with the organization ID may be identified based on the personal trait DB 233 or the organization trait setting DB 232.

The personal trait identification section 213 identifies the one or more trait combinations from the "prediction method" corresponding to the organization ID identified in S701, and identifies, based on the personal trait DB 233, the psychological trait component value and the prosociality component value that correspond to the member ID, for each of the one or more trait combinations, with respect to each member ID identified in S701 (S702). For example, if the trait combination is the combination of the extraversion and SVO, the extraversion value and SVO value are identified based on the personal trait DB 233.

The cooperative action ratio prediction section 223 predicts the cooperative action ratio, and the output determination section 227 determines the induction content (S703). Data about the predicted cooperative action ratio is stored in the cooperative action ratio DB 231.

Specifically, for the combination of the extraversion and SVO, the cooperative action ratio prediction section 223 substitutes the extraversion value of each of all the members, the SVO value of each of all the members, and the threshold for SVO into Expression 1, and calculates Expression 1, thus calculating Cooperation about the combination of the extraversion and SVO. The cooperative action ratio prediction section 223 calculates Cooperation about each trait combination corresponding to the organization ID, and predicts (calculates) the cooperative action ratio of the organization using all the Cooperations corresponding to the organization ID.

For each of all or some of the one or more trait combinations corresponding to the organization ID, the output determination section 227 identifies the induction message, on a member-by-member basis, based on the output setting DB 234. Specifically, for example, for the combination of the extraversion and SVO, the output determination section 227 identifies, based on the output setting DB 234, the induction message corresponding to the magnitude of the extraversion value and the magnitude of the SVO value of the member. Note that for each of the psychological trait component and the prosociality component, a value that is neither high nor low may be present. In this case, for the trait combination having such a component, no induction message may be identified. That is, the induction message is not necessarily prepared for each member, and for each of all the trait combinations corresponding to the organization.

The output determination section 227 determines information on an output target, based on data about the cooperative action ratio predicted in S703 and on the induction message for each member identified in S703, and visualizes the determined information (S704).

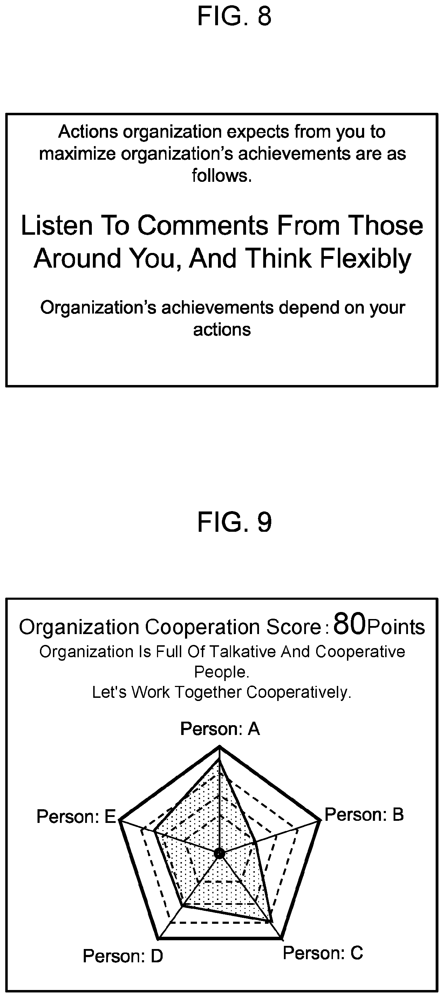

Specifically, for example, the output determination section 227 generates the information for the member, as information that includes the induction message for a certain member, and causes the member apparatus 130 of the certain member to display the information for the member. Fig. 8 illustrates an example of the information for the member. Such information for the member is displayed on a member-by-member basis. For each member, the content of the information for the member depends on the induction message identified according to the component value combination identified for the member (for each trait combination in the "prediction method" corresponding to the organization, the magnitudes of values of the psychological trait component and the prosociality component that constitute the trait combination). The number of induction messages in the information for the member may not necessarily be the same among all the members.

For example, the output determination section 227 generates the information for the administrator as information based on data about the predicted cooperative action ratio of the organization, and causes the administrator apparatus 180 of the administrator of the organization to display the information for the administrator. Fig. 9 illustrates an example of the information for the administrator. Note that in Fig. 9, a cooperation score is a numerical value determined based on the cooperative action ratio. For example, the cooperation score may be 100 times the cooperative action ratio (for example, the cooperation score "80" is 100 times the cooperative action ratio "0.8"). In Fig. 9, there are four stages for each member. The stage of each member may be determined based on the value "$X_i \times (Y_i - Y_{th})$" of the member with respect to each trait combination.

The one embodiment has thus been described above. The is an example for describing the present invention. There is no intention to limit the scope of the present invention only to this embodiment. The present invention can be executed also as other various implementations.

For example, the timing of predicting the cooperative action ratio of the organization, and the timing of displaying the induction content for the member belonging to the organization may be freely selected timing. For example, such timing may be timing in execution of an organization activity, such as an on-line meeting, or timing by which the organization's achievements are required (e.g., every month in a case of a monthly project).

As for the personal trait of each member, the values of the psychological trait component and the prosociality component may be either a categorical or continuous value. The value range (e.g., the maximum or minimum) is not necessarily defined.

For example, as described above, "output content" in the output setting DB 234 may be data on which the induction content is based, and "identification" of the induction message may be generation of the induction message based on the data.

The "organization" may be defined as a different organization if the members are even partially different. If the organizations have different target achievements even with the completely same members, the organizations may be defined as different from each other.

For example, the cooperative action ratio prediction section 223 may predict the cooperative action ratio of the organization, using a model of a machine learning base or a statistical base, and the psychological trait (one or more psychological trait component values) and the prosociality (one or more prosociality component values) of each member. For example, the model may be a model learned using, as a training dataset, a dataset that includes achievements of a plurality of component value combinations for each member of the organization, and the cooperative action ratio of the organization.

For each of the members belonging to the organization, with respect to each trait combination in "prediction method" corresponding to the organization, the cooperative action ratio prediction section 223 may predict the cooperative action ratio of the member, based on the relationship between the values of the prosociality component and the psychological trait component (e.g., the value "$X \times (Y - Y_{th})$" for the member with respect to each trait combination corresponding to the organization). The "cooperative action ratio" of the member may be a probability of the member performing the cooperative action for the organization. The cooperative action ratio prediction section 223 may estimate the aptitude degree of each member to the organization, based on the relationship between the predicted cooperative action ratio of each member and the predicted cooperative action ratio of the organization (for example, based on whether or not the cooperative action ratio of the member is equal to or higher than the cooperative action ratio of the organization). For example, it may be assumed that the smaller the difference between the cooperative action ratio of the member and the cooperative action ratio of the organization is, the larger the aptitude degree is. The cooperative action ratio prediction section 223 may estimate the compatibility between members, based on the relationship between the personal traits of the members, and on the relationship between the predicted cooperative action degrees of the members. The visualized information about the predicted cooperative action degree may include information that represents the estimated aptitude degree of each member, and the estimated compatibility of the members. Thus, according to the aptitude degrees of the members to the organization and/or the compatibility between the members, further contribution to maximization of the organization's achievements is expected. For example, the induction content for the member may be identified (for example, generated) based on the aptitude degree of the member to the organization and/or the compatibility of the member with another member, instead of or in addition to the component value combination of the member (the magnitude of value of each of the psychological trait component and the prosociality component of the trait combination). According to such induction content, the success rate of induction for the member to perform the cooperative action is expected to be increased. As described above, the cooperative action ratio prediction section 223 may estimate the aptitude degree of each member to the organization and/or estimate the compatibility between the members.

**Claims**

1. A cooperative action support system, comprising:

an interface apparatus at which an input device and a display device are coupled to each other;
a storage apparatus; and
an arithmetic apparatus coupled to the storage apparatus, wherein
the storage apparatus stores personal trait data that includes data representing a personal trait of each of members belonging to an organization,
for each of the members, the data representing the personal trait of the member is data input from the input device via the interface apparatus, or data estimated based on the input data, and
the arithmetic apparatus:

identifies the personal trait of each of the members belonging to the organization, from the personal trait data;
predicts a cooperative action degree in the organization, based on a personal trait relationship that is a relationship between the personal traits of the members; and
causes the display device to display information about the predicted cooperative action degree, via the interface apparatus.

2. The cooperative action support system according to claim 1, wherein

for each of the members, the personal trait of the member includes two or more types of personal traits,
the two or more types of personal traits include:

a first type of personal trait about an attitude and/or a tendency related to cooperation; and
a second type of personal trait about a psychological trait and/or a character trait,

the first type of personal trait includes a first type of traits that are one or more components,
the second type of personal trait includes a second type of traits that are one or more components, and
the personal trait relationship includes a relationship between the one or more traits of the first type and the one or more traits of the second type, for each of the members.

3. The cooperative action support system according to claim 2, wherein

for each of the members,

each of the one or more traits of the first type is a prosociality component, and
each of the one or more traits of the second type is any of agreeableness, extraversion, and conscientiousness,

the personal trait relationship includes a relationship between trait combinations of the members, and
for each of the members, the trait combination includes at least one of

a first combination of the agreeableness and the prosociality component,
a second combination of the extraversion and the prosociality component, and
a third combination of the conscientiousness and the prosociality component.

4. The cooperative action support system according to claim 3, wherein

for each of the members,

each of the one or more traits of the first type has a value representing a magnitude of the prosociality component, and
each of the one or more traits of the second type has a value representing a magnitude of any of the agreeableness, the extraversion, and the conscientiousness, and

for each of the members,

the first combination is a value calculated based on a value representing a magnitude of the agreeableness, and on a value representing a magnitude of the prosociality component,
the second combination is a value calculated based on a value representing a magnitude of the extraversion, and on the value representing the magnitude of the prosociality component, and
the third combination is a value calculated based on a value representing a magnitude of the conscientiousness, and on the value representing the magnitude of the prosociality component.

5. The cooperative action support system according to claim 2, wherein
for each of one or more members among the members,

the arithmetic apparatus determines induction content that is content that induces the member to perform a cooperative action, based on a relationship between magnitudes of the one or more traits of the first type, and magnitudes of the one or more traits of the second type, and
information about the predicted cooperative action degree includes the induction content determined for the member.

6. The cooperative action support system according to claim 5, wherein

each of the one or more traits of the first type is a prosociality component, and
each of the one or more traits of the second type is any of agreeableness, extraversion, and conscientiousness.

7. The cooperative action support system according to claim 2, wherein

the arithmetic apparatus:

for each of the members, predicts the cooperative action degree of the member, based on the relationship between the one or more traits of the first type and the one or more traits of the second type; and
estimates an aptitude degree of each member to the organization, based on a relationship between the predicted cooperative action degree of the corresponding member and the predicted cooperative action degree of the organization, and

the information about the predicted cooperative action degree includes information that represents the estimated aptitude degree of the corresponding member.

8. The cooperative action support system according to claim 2, wherein

the arithmetic apparatus:

for each of the members, predicts the cooperative action degree of the member, based on the relationship between the one or more traits of the first type and the one or more traits of the second type; and
estimates compatibility between the members, based on at least one of a relationship between personal traits of the members, and a relationship between cooperative action degrees of the members, and

the information about the predicted cooperative action degree includes information that represents the estimated compatibility between the members.

9. A cooperative action support method causing a computer to perform:

identifying a personal trait of each of members belonging to an organization, from personal trait data that includes data representing the personal trait of each of the members;

predicting a cooperative action degree in the organization, based on a personal trait relationship that is a relationship between the personal traits of the members; and

visualizing information about the predicted cooperative action degree.

10. A recording medium storing a computer program causing a computer to execute:

identifying a personal trait of each of members belonging to an organization, from personal trait data that includes data representing the personal trait of each of the members;

predicting a cooperative action degree in the organization, based on a personal trait relationship that is a relationship between the personal traits of the members; and

visualizing information about the predicted cooperative action degree.

# FIG. 1

EP 4 643 780 A1

## FIG. 2

Action Input Section — 211

Personal Trait Estimation Section — 222

Personal Trait DB — 233

Personal Trait Identification Section — 213

Cooperative Action Ratio Prediction Section — 223

Organization Trait Setting DB — 232

Cooperative Action Ratio DB — 231

Setting Input Section — 212

Trait Setting Section — 225

Information Setting Section — 226

Output Setting DB — 234

Output Section — 240

Output Determination Section — 227

Output DB — 235

210  220  115  114

EP 4 643 780 A1

# FIG. 3

Personal Trait DB
233

| Member ID | Psychological Trait | Prosociality | Others |
|---|---|---|---|
| UA | Neuroticism: 5<br>Extraversion: 3<br>Openness: 2<br>Agreeableness: 4<br>Conscientiousness: 1 | SVO: 5<br>CC: 4<br>UC: 3 | ... |
| ... | ... | ... | ... |

# FIG. 4

Organization Trait Setting DB
232

| Organization ID | Prediction Method | Others |
|---|---|---|
| GA | $C_1$=(Extraversion, SVO)<br>$C_2$=(Conscientiousness, UC) | ... |
| ... | ... | ... |

# FIG. 5

Cooperative Action Ratio DB
231

| Organization ID | Prediction Result | Others |
|---|---|---|
| GA | $C_1$=70, $C_2$=90, $C_W$=80 | ... |
| ... | ... | ... |

# FIG. 6

Output Setting DB
234

| Output ID | Output Content | Others |
|---|---|---|
| OA | Cases Of (Extraversion, SVO)<br>Extraversion：High, SVO：High<br>　Message: ....<br>Extraversion：High, SVO:Low<br>　Message: ....<br>Extraversion：Low, SVO:High<br>　Message: ....<br>Extraversion：Low, SVO:Low<br>　Message: .... | ... |
| ... | ... | ... |

# FIG. 7

Start

Identify organization ID and member IDs of all members — S701

Identify psychological trait component value and prosociality component value — S702

Predict cooperative action ratio, and identify induction message — S703

Visualize — S704

End

## FIG. 8

Actions organization expects from you to
maximize organization's achievements are as
follows.

# Listen To Comments From Those Around You, And Think Flexibly

Organization's achievements depend on your
actions

## FIG. 9

Organization Cooperation Score : 80 Points
Organization Is Full Of Talkative And Cooperative
People.
Let's Work Together Cooperatively.

Person: A

Person: E

Person: B

Person: D

Person: C

## EUROPEAN SEARCH REPORT

**Application Number**

EP 25 16 3096

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/058835 A1 (AHLUWALIA VISHAL [US] ET AL) 23 February 2023 (2023-02-23) <br> * paragraph [0001] * <br> * paragraphs [0033] - [0131] * <br> * figures * <br> ----- | 1-10 | INV. <br> A61B5/16 <br> G06Q10/0631 <br> G06Q10/0639 |
| X | MEI-LING WANG: "A study of team effectiveness influenced by the fitting between team personality composition and team virtualization level", TECHNOLOGY MANAGEMENT FOR GLOBAL ECONOMIC GROWTH (PICMET), 2010 PROCEEDINGS OF PICMET '10:, IEEE, PISCATAWAY, NJ, USA, 18 July 2010 (2010-07-18), pages 1-8, XP031775567, ISBN: 978-1-4244-8203-0 <br> * abstract * <br> * section I * <br> ----- | 1-10 | |
| X | SOO LING LIM ET AL: "Kill Chaos with Kindness: Agreeableness Improves Team Performance Under Uncertainty", ARXIV.ORG, CORNELL UNIVERSITY LIBRARY, 201 OLIN LIBRARY CORNELL UNIVERSITY ITHACA, NY 14853, 9 August 2022 (2022-08-09), XP091291136, <br> * abstract * <br> * section I * <br> ----- | 1-10 | **TECHNICAL FIELDS SEARCHED (IPC)** <br><br> A61B <br> G06Q |

The present search report has been drawn up for all claims

| Place of search | Date of completion of the search | Examiner |
|---|---|---|
| Munich | 28 July 2025 | Aguilar, José María |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P4C01)

EP 4 643 780 A1

## ANNEX TO THE EUROPEAN SEARCH REPORT
## ON EUROPEAN PATENT APPLICATION NO.

EP 25 16 3096

28-07-2025

| Patent document cited in search report | Publication date | Patent family member(s) | Publication date |
|---|---|---|---|
| US 2023058835 A1 | 23-02-2023 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024073549 A
- JP 2023038750 A
- JP 2023014642 A
- US 18378475 B
- EP 23203803